# EUROPÄISCHE PATENTSCHRIFT

(11) **EP 0 824 319 B1**
(45) Veröffentlichungstag und Bekanntmachung des Hinweises auf die Patenterteilung: **01.12.1999**
(21) Anmeldenummer: 97900598.0
(22) Anmeldetag: 11.01.1997
(51) Int. Cl.: A22C 11/10

(54) **VORRICHTUNG ZUM ABTEILEN VON PORTIONSPACKUNGEN EINES UNTERTEILBAREN FÜLLGUTES IN EINER FLEXIBLEN SCHLAUCHHÜLLE**
DEVICE FOR MAKING PORTION PACKS OF A DIVIDABLE FILLING IN A FLEXIBLE TUBULAR CONTAINER
DISPOSITIF POUR FORMER DES PORTIONS EMPAQUETEES D'UNE MATIERE DE REMPLISSAGE SECTIONNABLE LOGEE DANS UNE GAINE TUBULAIRE FLEXIBLE

(30) Priorität: 23.02.1996 DE 19606654
(43) Veröffentlichungstag der Anmeldung: 25.02.1998
(73) Patentinhaber: Polyclip System Gmbh & Co.Kg, 60489 Frankfurt am Main (DE)
(72) Erfinder: HANTEN, Jürgen, D-33519 Rockenberg (DE); VERMEHREN, Günter, D-61250 Usingen (DE)
(74) Vertreter: Fischer, Ernst, Dr.
(86) Internationale Anmeldenummer: EP9700121
(87) Internationale Veröffentlichungsnummer: WO9730596

(56) Entgegenhaltungen:
- EP-A- 0 507 374
- CH-A- 170 301
- DE-A- 2 550 042
- DE-A- 3 610 010
- FR-A- 1 557 553
- GB-A- 809 532
- US-A- 4 593 516
- US-A- 5 495 707

## Beschreibung

Die Erfindung betrifft eine Vorrichtung zum Abteilen von Portionspackungen eines unterteilbaren Füllgutes in einer flexiblen Schlauchhülle durch Einschnüren des gefüllten Schlauches und Aufbringen mindestens eines Verschlußelements auf den durch axiales Verdrängen des Füllgutes gebildeten Schlauchzopf, mit überlappend und symmetrisch zur Schlauchachse gegeneinander schwenkbaren Verdrängerelementen, welche gemeinsam eine größenveränderliche Öffnung umschreiben.

Derartige Abteilvorrichtungen sind in Verbindung mit Verschließvorrichtungen namentlich zum Abteilen von Einzelwürsten aus einem Wurststrang vielfältig bekannt, beispielsweise aus den DE-Schriften 10 27 548, 15 86 210, 25 50 042 und 36 10 010. Solche Vorrichtungen sind regelmäßig in Arbeitsrichtung hinter einer Füllmaschine angeordnet, welche das Füllgut mit Hilfe eines Füllrohres in die von dessen Außenseite abgezogene Schlauchhülle drückt. Zum Abteilen werden der Füllvorgang gestoppt und die Abteil- sowie die Verschließvorrichtungen in Tätigkeit gesetzt. Nach Abschluß ihrer Arbeitszyklen wird der Füllvorgang fortgesetzt, bis erneut abgeteilt und verschlossen werden soll.

Neben linear gegenläufig verschiebbaren Verdrängerelementen, wie sie u.a. aus der DE-OS 36 10 010 bekannt sind, gibt es auch Verdrängervorrichtungen mit schwenkbaren Verdrängerelementen. So zeigt beispielsweise die DE-OS 15 86 210 Verdrängerelemente aus schwenkbaren Scherenteilen, deren Einschnür-Ausschnitte auf Kreisbogen an den gefüllten Schlauch herangeführt werden. Letzteres gilt ebenfalls für die aus der DE-OS 25 50 042 bekannten Verdrängerelemente, deren Scherenarme sich auch in voll geöffnetem Zustand an ihren Spitzen überlappen.

Allen bekannten Verdrängersystemen ist der Nachteil gemeinsam, daß sie aus den verschiedensten Gründen sehr stabile Konstruktionen erfordern und die demzufolge beträchtlichen Massen, welche jeweils zu beschleunigen und zu verzögern sind, hohen Taktzahlen entgegenstehen. Auch hat sich gezeigt, daß bei höheren Taktzahlen es aufgrund der Reibung des Schlauchmaterials an den Verdrängerblechen zu Beschädigungen der Schlauchhülle kommt.

Die Aufgabe, ein auch für hohe Taktzahlen geeignetes Verdrängersystem anzugeben, löst die Erfindung dadurch, daß die Verdrängerelemente aus mindestens vier Leisten bestehen, die mit ihren einen Enden auf einem zur Schlauchachse konzentrischen Kreis mit gleichen Abständen ortsfest schwenkbar gelagert sind, während ihre andereren Endbereiche in einem ebenfalls zur Schlauchachse konzentrischen und um diese begrenzt drehbaren Ring derart geführt sind, daß sie sich kreissehnenartig im Teilkreis ihrer Schwenklager erstrecken und dem Ring gegenüber sowohl Schwenk- als auch Längsbewegungen in ihrer Hauptebene ausführen können. Wird der Ring aus seiner Grundstellung, in der die Leisten eine den gefüllten Schlauch ungehindert durchlassende Öffnung umschreiben, um die Schlauchachse gedreht (geschwenkt), so werden zugleich die Leisten um ihre Schwenklager geschwenkt, bewegen sich aufeinander zu und verkleinern die zwischen ihnen gebildete Öffnung gleichmäßig, ohne die geometrische Form der Öffnung zu verändern; im Falle von vier Leisten ein Quadrat. Dieses Verschwenken kann fortgesetzt werden, bis die Leisten sich maximal genähert haben - im Falle von vier Leisten bleibt dabei der paarweise parallele Verlauf erhalten.

Zwar ist aus der US-PS 4 593 516 eine zum Verschließen von Beuteln bestimmte Vorrichtung an sich bekannt, welche einander überlappende symmetrisch zur Beutelachse gegeneinander schwenkbare Verdrängerelemente aufweist, die gemeinsam eine größenveränderliche Öffnung umschreiben, und bei der die Verdrängerelemente aus vier Leisten bestehen, die mit ihren einen Enden auf einem zur Beutelachse konzentrischen Kreis mit gleichen Abständen ortsfest schwenkbar gelagert sind. Jedoch sind diese Leisten an den Schwenklagerenden mit Kettenrädern fest verbunden, deren eines mittels eines Hebels von einem Pneumatikzylinder-Kolben verschwenkt werden kann und diese Bewegung über eine Kette auf die anderen Kettenräder überträgt; die Schwenkbewegung der Kettenräder läßt die Leisten mitschwenken. Die Verschließkraft wird somit ausschließlich durch Torsion an den Schwenkachsen übertragen, was angesichts der Hebellänge der Leisten die notwendig kraftvolle Verdrängung von beispielsweise Wurstbrät ausschließt. Demgegenüber greift erfindungsgemäß der die Schwenkbewegungen bewirkende Ring an den anderen Enden der Leisten an und kann daher wesentlich größere Kräfte auf diese - und damit die Portionspackung - übertragen.

Vorzugsweise sind - in Übereinstimmung mit dem Stand der Technik - zwei gleichartige Verdränger vorgesehen, die im Schließzustand in axialen Abstand spreizbar sind, so daß dann zwischen ihnen das Verschlußelement oder deren mehrere auf den Schlauchzopf aufgebracht werden können, und erfindungsgemäß sind die die Endbereiche der Leisten führenden Ringe beider Verdränger durch untereinander und zur Schlauchachse parallele Führungsstangen verbunden. Auf diese Weise erfolgt bei beiden Verdrängern der Verdrängungsvorgang - durch Verdrehen der die Leisten-Endbereiche führenden Ringe - synchron.

Die Leisten selbst haben vorzugsweise einen flachen Rechteck-Querschnitt, derart, daß der erforderlichen Verdrängungskraft das hohe Widerstandsmoment der längeren Rechteckseite entgegensteht.

Von Vorteil ist ferner, wenn auch die Schwenklager auf einem Ring angeordnet sind, der als Innenring den die anderen Endbereiche der Leisten führenden (Außen-)Ring drehbar lagert.

Weitere vorteilhafte Ausgestaltungen des Erfindungsgegenstandes sind Inhalt zusätzlicher Unteransprüche und der nachfolgenden Beschreibung eines Ausführungsbeispiels anhand der Zeichnung entnehmbar; in dieser zeigt:
- Fig. 1: einen Axialschnitt der neuen - doppelten und spreizbaren - Verdrängervorrichtung;
- Fig. 2: eine Draufsicht auf die (rechte, füllrohrnahe) Verdrängervorrichtung in Fig. 1;
- Fig. 3: eine der Fig. 1 entsprechende Darstellung nach dem Verdrängen und Spreizen; und
- Fig. 4: eine der Fig. 2 entsprechende Darstellung im Arbeitszustand gemäß Fig. 3.

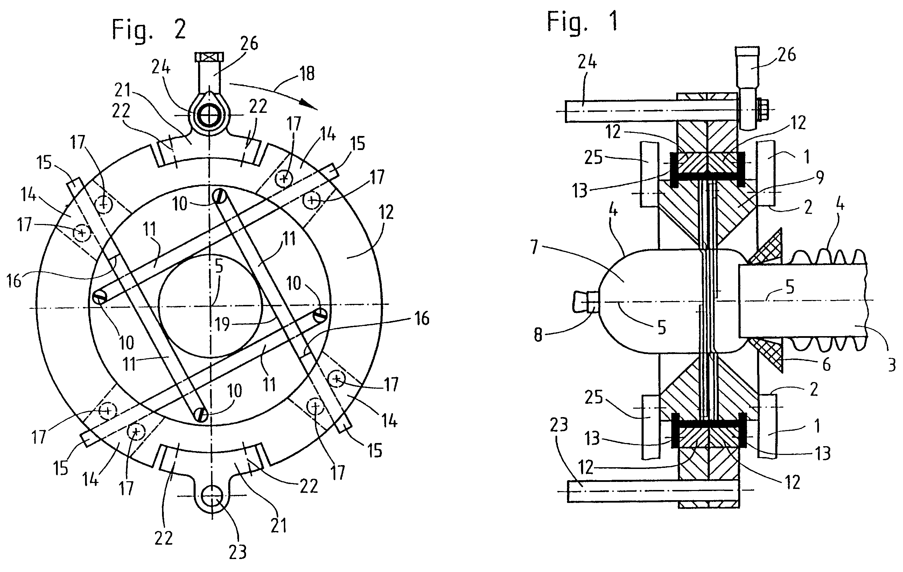

In der - abgebrochen dargestellten - Wand 1 einer Verschließmaschine ragt durch eine Öffnung 2 ein Füllrohr 3, welches in üblicher Weise den harmonikaartig aufgefädelten Vorrat an Schlauch 4 trägt. Die Achse 5 des Füllrohres 3 bildet daher zugleich die Schlauchachse. Der Schlauch 4 läuft beim Füllvorgang - wie dies Fig. 1 veranschaulicht - durch die Darmbremse 6 vom Füllrohr 3 ab, weil er vom Füllgut 7 - hier Wurstmasse - mitgenommen wird; am vorderen Ende ist der Schlauch 4 durch ein Verschlußelement in Form eines Clips 8 verschlossen.

An der Maschinenwand 1, koaxial zur Schlauchachse 5 und damit die Öffnung 2 umgebend, ist ein Innenring 9 befestigt. Er trägt die Schwenklager 10 von vier Verdrängerelementen in Form von Leisten 11, deren Lageranordnung in der Grund- oder Ruhestellung ( = keine Verdrängung) am besten aus Fig. 2 hervorgeht.

Letzteres gilt - in Verbindung mit Fig. 1 - auch für die flach-rechteckige Querschnittsform der Leisten 11, während der Querschnitt des Innenrings 9 Fig. 1 allein entnehmbar ist.

Auf dem Ring 9 ist ein (Außen-)Ring 12 drehbar gelagert und mittels (Kunststoff-)Scheiben 13 gegen axiales Verschieben gesichert. Ebenso gleichmäßig am Umfang verteilt wie die Schwenklager 10 in bezug auf den Ring 9 sind im Ring 12 sich radial erstreckende Vertiefungen 14 angeordnet, in die die Leisten 11 mit ihren den Schwenklagern 10 gegenüberliegenden Endbereichen 15 eintauchen; um den Höhenunterschied in Richtung der Achse 5 auszugleichen, der sich durch das Fig. 2 entnehmbare Überlappen der kreissehnenartig angeordneten Leisten 11 ergibt, sind die Leisten des einen Parallelpaares mit im wesentlichen Z-förmigen Abkröpfungen 16 versehen. In den Vertiefungen 14 sind beabstandete Führungsstücke 17 befestigt, deren zueinander weisende Flächen abgerundet sind; im Beispiel handelt es sich um kreisrunde Zapfen, die auch als drehbare Rollen ausgestaltet sein könnten. Die Endbereiche 15 der Leisten 11 sind zwischen die Führungsstücke 17 geführt, wie dies wiederum aus Fig. 2 eindeutig hervorgeht.

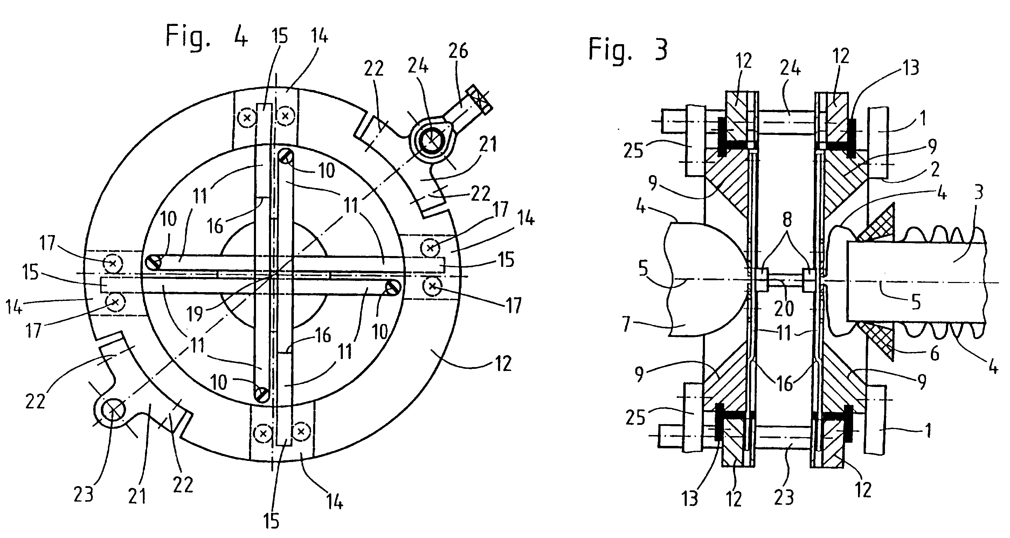

Wird der Ring 12 in Richtung des Pfeiles 18 um die Achse 5 gedreht, so werden von den Führungsstücken 17 die Endbereiche 15 der Leisten 11 mitgenommen, während deren Schwenklager 10 (auf dem Ring 9) ortsfest bleiben. Die Folge ist eine Verschwenkung der Leisten 11, mit der eine Verkleinerung der zwischen ihnen gebildeten quadratischen Öffnung 19 einhergeht, bis schließlich der in Fig. 4 dargestellte Zustand erreicht ist, in dem die parallel verlaufenden Paare von Leisten 11 mit geringem Abstand voneinander angeordnet sind und eine nur noch sehr kleine Verdrängeröffnung 19 zwischen sich einschließen, in welcher der Schlauchzopf 20 (Fig. 3) zusammengepreßt ist.

Daß die Vertiefungen 14 im Ring 12 nicht exakt radial angeordnet sind, weil der Parallelversatz der Leisten 11 eine entsprechend seitlich versetzte Anordnung der Führungsstücke 17 erfordert, ist am besten ebenfalls der Fig. 4 zu entnehmen.

Während die Fig. 2 und 4 nur die füllrohrseitige Abtei- oder Verdrängervorrichtung zeigen, veranschaulichen die Schnittdarstellungen der Fig. 1 und 3 das vollständige, spreizbare Doppelaggregat aus zwei gleichartig aufgebauten Verdrängervorrichtungen, die jedoch spiegelbildlich zueinander angeordnet sind. An beiden (Außen-)Ringen 12 sind Kopplungsstücke 21 befestigt, und zwar derart, daß die relative Umfangslage zum Ring 12 mit Hilfe der strich-punktiert angedeuteten Schraubbefestigungen 22 in begrenztem Umfange justiert werden kann. An den Kopplungsstücken 21 des füllrohrseitigen Verdrängers sind Führungsstangen 23 und 24 diametral gegenüber befestigt, während die Kopplungsstücke 21 des anderen Verdrängers darauf gleiten können, um den Spreizvorgang zu bewerkstelligen, der aus der Zusammenschau der Fig. 1 und 3 hervorgeht. Gesteuert wird der Spreizvorgang durch - nicht dargestellte - Betätigungsmittel, die am (abgebrochen dargestellten) Flansch 25 angreifen, der seinerseits am Innenring 9 des äußeren Verdrängers befestigt ist. An der entsprechend verlängerten Führungsstange 24 bzw. dem zugehörigen Kopplungsstück 21 des füllrohrseitigen Verdrängers ist ein Gelenkstangenkopf 26 angeordnet, über den die Betätigungskraft für die Schwenkbewegung der (Außen-)Ringe 12 in Richtung des Pfeiles 18 aufgebracht werden kann.

Die voneinander unabhängige Einstellbarkeit der Umfangsage beider Ringe 12 in bezug auf die Führungsstangen 23, 24 erlaubt es, die Größe der Verdrängeröffnung 19 im geschlossenen Zustand (Fig. 4) bei beiden Verdrängern etwas unterschiedlich einzustellen, um das Nachziehen des Schlauchzopfes 20 durch den füllrohrseitigen Verdränger beim Spreizen (Fig. 3) zu gewährleisten.

## Patentansprüche

1. Vorrichtung zum Abteilen von Portionspackungen eines unterteilbaren Füllgutes in einer flexiblen Schlauchhülle durch Einschnüren des gefüllten Schlauches und Aufbringen mindestens eines Verschlußelements auf den durch axiales Verdrängen des Füllgutes gebildeten Schlauchzopf, mit überlappend und symmetrisch zur Schlauchachse gegeneinander schwenkbaren Verdrängerelementen, welche gemeinsam eine größenveränderliche Öffnung umschreiben, wobei
die Verdrängerelemente aus mindestens vier Leisten (11) bestehen, die mit ihren einen Enden auf einem zur Schlauchachse (5) konzentrischen Kreis mit gleichen Abständen ortsfest schwenkbar gelagert sind (10), **dadurch gekennzeichnet,** daß die andereren Endbereiche (15) der Verdrängerelemente in einem ebenfalls zur Schlauchachse (5) konzentrischen und um diese begrenzt drehbaren Ring (12) derart geführt sind, daß sie sich kreissehnenartig im Teilkreis ihrer Schwenklager (10) erstrecken und dem Ring (12) gegenüber sowohl Schwenk- als auch Längsbewegungen in ihrer Hauptebene ausführen können.

2. Vorrichtung nach Anspruch 1,
**dadurch gekennzeichnet,** daß die Leisten (11) flachen Reckteck-Querschnitt haben.

3. Vorrichtung nach Anspruch 1 oder 2,
**dadurch gekennzeichnet,** daß die Schwenklager (10) auf einem Innenring (9) angeordnet sind, der den die anderen Endbereiche (15) der Leisten (11) führenden Ring (12) drehbar lagert.

4. Vorrichtung nach Anspruch 3,
**dadurch gekennzeichnet,** daß der Innenring (9) am Maschinengehäuse (7) einer Verschließmaschine konzentrisch zu der mit der Schlauchachse (5) koaxialen Füllrohrachse befestigbar ist.

5. Vorrichtung nach einem der Ansprüche 1 bis 4,
**dadurch gekennzeichnet,** daß der die anderen Endbereiche (15) der Leisten (11) führende Ring (12) einseitig radiale Vertiefungen (14) aufweist, in die die Leisten (11) eintauchen.

6. Vorrichtung nach Anspruch 5,
**dadurch gekennzeichnet,** daß in den Vertiefungen (14) jeweils Paare von außenseitig gerundeten Führungsstücken (17) angeordnet sind, zwischen die die Endbereiche (15) der Leisten (11) lose eingeführt sind.

7. Vorrichtung nach einem der vorhergehenden Ansprüche,
**dadurch gekennzeichnet**, daß an dem die Endbereiche (15) der Leisten (11) führenden Ring (12) Kopplungsstücke (21) für eine Drehbetätigung (26) angeordnet und in ihrer Drehwinkelstellung zum Ring (12) einstellbar befestigt sind (22).

8. Vorrichtung nach einem der vorhergehenden Ansprüche mit vier Leisten,
**dadurch gekennzeichnet**, daß die Endbereiche (15) zweier parallel zueinander verlaufender Leisten (11) um etwa ihre Dicke Z-förmig abgekröpft sind.

9. Vorrichtung nach mindestens einem der vorhergehenden Ansprüche mit zwei Verdrängern, die im Schließzustand axial in Abstand zueinander verschiebbar sind,
**dadurch gekennzeichnet**, daß die die Endbereiche (15) der Leisten (11) führenden Ringe (12) durch untereinander und zur Schlauchachse (5) parallele Führungsstangen (23, 24) verbunden sind.

10. Vorrichtung nach Anspruch 9,
**dadurch gekennzeichnet**, daß die Führungsstangen (23, 24) an den Kopplungsstücken (21) befestigt oder in diesen geführt sind.

## Claims

1. A device for making portion packs of a dividable filling in a flexible tubular container by crimping the filled tube and placing at least one seal on the pinched area formed by axially crimping the filling, comprising crimping elements, which in an overlapping manner and symmetrical to the tube axis can be pivoted against each other and together define an aperture of variable size, where the crimping elements consist of at least four strips (11), which with their one ends are stationarily pivoted (10) with equal spacings on a circle concentric with the tube axis (5), **characterized in** that the other end regions (15) of the crimping elements are guided in a ring (12), which is likewise concentric with the tube axis (5) and to a limited extent can likewise be rotated about the same, that they extend like chords in the partial circle of their pivots (10) and can perform both pivoting and longitudinal movements in their main plane in relation to the ring (12).

2. The device as claimed in claim 1,
**characterized in** that the strips (11) have a flat rectangular cross-section.

3. The device as claimed in claim 1 or 2,
**characterized in** that the pivots (10) are provided on an inner ring (9), on which the ring (12) guiding the other end regions (15) of the strips (11) is rotatably supported.

4. The device as claimed in claim 3,
**characterized in** that the inner ring (9) can be fixed at the machine housing (7) of a sealing machine concentrically with respect to the filling pipe axis coaxial to the tube axis (5).

5. The device as claimed in any of claims 1 to 4,
**characterized in** that the ring (12) guiding the other end regions (15) of the strips (11) has unilaterally radial recesses (14) in which engage the strips (11).

6. The device as claimed in claim 5,
**characterized in** that in each of the recesses (14) pairs of guiding members (17) rounded on their outside are disposed, between which the end regions (15) of the strips (11) are loosely inserted.

7. The device as claimed in any of the preceding claims,
**characterized in** that on the ring (12) guiding the end regions (15) of the strips (11) coupling members (21) are disposed for a rotary actuation (26) and can adjustably be fixed (22) in their angular position with respect to the ring (12).

8. The device as claimed in any of the preceding claims comprising four strips, **characterized in** that the end regions (15) of two parallel strips (11) are bent in a Z-shaped manner by about their thickness.

9. The device as claimed in at least one of the preceding claims comprising two crimping elements, which in the closed condition can be axially moved with respect to each other, **characterized in** that the rings (12) guiding the end regions (15) of the strips (11) are joined together by guide rods (23, 24) parallel to each other and to the tube axis (5).

10. The device as claimed in claim 9,
**characterized in** that the guide rods (23, 24) are fixed at the coupling members (21) or guided in the same.

## Revendications

1. Dispositif pour former des portions empaquetées d'une matière de remplissage sectionnable dans une gaine tubulaire souple, par striction du tube souple rempli et apposition d'au moins un élément de fermeture sur la queue du tube souple formée par refoulement axial de la matière de remplissage, comportant des éléments refouleurs pouvant pivoter les uns par rapport aux autres en chevauchement et symétriquement a l'axe du tube souple, éléments qui circonscrivent une ouverture de taille variable, les éléments refouleurs consistant en au moins quatre barres (11) qui, par leurs premières extrémités, sont montées à pivotement (10) à distances égales fixes sur un cercle concentrique à l'axe (5) du tube souple,**caractérise** en ce que les autres régions (15) terminales des éléments refouleurs sont guidées, dans une bague (12) également concentrique à l'axe (5) du tube souple et à rotation limitée autour de cet axe, de telle sorte qu'elles s'étendent à la manière de cordes de cercle dans le cercle primitif de référence de leurs paliers (10) de pivotement, et peuvent accomplir par rapport à la bague (12) des mouvements tant de pivotement que longitudinaux dans leur plan principal.

2. Dispositif suivant la revendication 1, **caractérisé** en ce que les barres (11) ont une section rectangulaire plate.

3. Dispositif suivant la revendication 1 ou 2, **caractérisé** en ce que les paliers (10) de pivotement sont disposés sur une bague (9) intérieure qui reçoit à rotation la bague (12) guidant les autres régions (15) terminales des barres (11).

4. Dispositif suivant la revendication 3, **caractérisé** en ce que la bague (9) intérieure peut être fixée, sur le carter (7) d'une machine de fermeture, concentriquement à l'axe du tube de remplissage, axe qui est coaxial à l'axe (5) du tube souple.

5. Dispositif suivant l'une des revendications 1 à 4, **caractérisé** en ce que la bague (12) guidant les autres régions (15) terminales des barres (11) comporte d'un côté des renfoncements (14) radiaux, dans lesquels pénètrent les barres (11).

6. Dispositif suivant la revendication 5, **caractérisé** en ce que des paires respectives d'éléments (17) de guidage extérieurement arrondis sont disposées dans les renfoncements (14), paires entre lesquelles les régions (15) terminales des barres (11) sont librement introduites.

7. Dispositif suivant l'une des revendications précédentes, **caractérisé** en ce que des éléments (21) d'accouplement pour un actionnement (26) en rotation sont disposés sur la bague (12) guidant les régions (15) terminales des barres (11), et sont fixés (22) avec possibilité de réglage de leur position angulaire de rotation par rapport à la bague (12).

8. Dispositif suivant l'une des revendications précédentes, comportant quatre barres, **caractérisé** en ce que les régions (15) terminales de deux barres (11) s'étendant parallélement entre elles sont coudées en Z environ de leur épaisseur.

9. Dispositif suivant au moins l'une des revendications précédentes, comportant deux refouleurs qui, à l'état fermé, peuvent être déplacés axialement à distance l'un de l'autre, **caractérisé** en ce que les bagues (12) guidant les régions (15) terminales des barres (11) sont mutuellement reliées par des tiges (23, 24) de guidage parallèles entre elles et à l'axe (5) du tube souple.

10. Dispositif suivant la revendication 9, **caractérisé** en ce que les tiges (23, 24) de guidage sont fixées sur les éléments (21) d'accouplement ou guidées dans ces derniers.
